# EUROPEAN PATENT APPLICATION

(11) **EP 2 184 691 A1**
(43) Date of publication of application: **12.05.2010**
(21) Application number: 09173677.7
(22) Date of filing: 21.10.2009
(51) Int. Cl.: G06F 17/30

(54) **Image apparatus and image contents searching method thereof**

(30) Priority: 27.10.2008 KR 20080105243
(71) Applicant: SAMSUNG ELECTRONICS CO., LTD., Suwon-si Gyeonggi-do 442-742 (KR)
(72) Inventor: Shin, Jeong-soo, Gyeonggi-do (KR)
(74) Representative: Clark, David James

(57) **Abstract**

Disclosed are an image apparatus connected to an external device in which image contents are stored, and including a display unit on which the image contents are displayed, and an image contents searching method of the image apparatus, the image apparatus including: a pattern information storage unit which stores image pattern information corresponding to a keyword; and a controller which compares the image pattern information stored in the pattern information storage with the image contents in response to a searching request using the keyword, obtains an image pattern of the image contents corresponding to the image pattern information according to the keyword, and displays the certain image pattern on the display unit. A regular image pattern of the image contents is analyzed and compared to obtain and display a certain image pattern.

## Description

### BACKGROUND OF INVENTION

### Field of Invention

Apparatuses and methods consistent with the present invention relate to an image apparatus and an image contents searching method thereof, and more particularly to an image apparatus connected to an external device in which image contents are stored and is capable of searching for a certain image pattern from the image contents, and an image contents searching method thereof.

### Description of the Related Art

In general, an image apparatus receives and displays image information from an external device.

As an example of th e image apparatus, a television (TV) receives image information from one of a broadcasting receiver internally provided in the TV, an external broadcasting receiver externally connected to the TV, and a digital versatile disc (DVD) player externally connected to the TV, and processes the received image information, thereby displaying the image information.

If the external device such as a universal serial bus (USB) memory, a secure digital (SD) memory, etc. used as a storage medium to store the image contents is connected to the image apparatus, the image apparatus displays the image contents from the external device through its own program or the like.

### SUMMARY OF THE INVENTION

According to an aspect of the present invention, there is provided an image apparatus connected to an external device which stores image contents, the image apparatus including: a display unit which displays the image contents; a pattern information storage unit which stores image pattern information according to a keyword; and a controller which compares the image pattern information stored in the pattern information storage with the image contents in response to a user's searching request using the keyword, obtains a certain image pattern corresponding to the image pattern information according to the keyword from the image contents, and displays the certain image pattern on the display unit.

The image apparatus may further include an on screen display (OSD) output unit which outputs the keyword as an OSD menu to the display unit.

If the keyword is selected, the controller may control the OSD output unit to output sub keywords of the selected keyword as the OSD menu.

The keyword may include a background, an object and an expression.

At least two sub keywords selected among the sub keywords output as the OSD menu may be combined by at least one logic operation of 'and,' 'or' and 'not.'

The image apparatus may further include a remote controller to receive a searching request, wherein the remote controller includes: a search button which outputs the keyword as the OSD menu; a selection button which selects the keyword and selects at least one of the sub keywords of the selected keyword; and a logic operation button which applies a logic operation to the at least one of the selected sub keywords.

According to an aspect of the present invention, there is provided an image contents searching method of an image apparatus connected to an external device which stores image contents, the image contents searching method including: storing image pattern information in a pattern information storage unit according to a keyword; receiving a searching request using the keyword; comparing the image pattern information stored in the pattern information storage unit with the image contents in response to the searching request using the keyword; and obtaining an image pattern corresponding to the image pattern information stored in the pattern information storage unit according to the keyword from the image contents stored in the external device and displaying the certain image pattern.

The receiving the searching request may include outputting the keyword as an on screen display (OSD) menu on a display of the image apparatus.

The receiving the searching request may further include selecting the keyword output as the OSD menu, and selecting at least one of the sub keywords of the selected keyword.

The receiving the searching request may further include applying a logic operation to a plurality of selectedsub keywords.

The applying the logic operation may include applying at least one logic operation of 'and,' 'or' and 'not.'

According to the present invention there is provided an apparatus and method as set forth in the appended claims. Other features of the invention will be apparent from the dependent claims, and the description which follows.

### BRIEF DESCRIPTION OF THE DRAWINGS

The above and/or other aspects of the present invention will become apparent and more readily appreciated from the following description of the exemplary embodiments, taken in conjunction with the accompanying drawings, in which:

FIG. 1 is a control block diagram showing a connection between an image apparatus and an external device according to an exemplary embodiment of the present invention;

FIG. 2 is a control block diagram showing an image apparatus, and a remote controller that controls an external device and the image apparatus according to an exemplary embodiment of the present invention;

FIG. 3 illustrates keywords that are displayed as an on screen display (OSD) menu according to an exemplary embodiment of the present invention;

FIG. 4 illustrates sub keywords that are displayed when a "background" keyword is selected among the keywords shown in FIG. 3;

FIG. 5 illustrates sub keywords that are displayed when an "object" keyword is selected among the keywords shown in FIG. 3;

FIG. 6 illustrates sub keywords that are displayed when an "expression" keyword is selected among the keywords shown in FIG. 3;

FIG. 7 shows an example of a certain image pattern obtained using a logic operation of an image apparatus according to an exemplary embodiment of the present invention;

FIG. 8 is a control flowchart of an image contents searching method of an image apparatus according to an exemplary embodiment of the present invention; and

FIG. 9 is a control flowchart of an image contents searching method of an image apparatus using a logic operation according to an exemplary embodiment of the present invention.

### DETAILED DESCRIPTION OF EXEMPLARY EMBODIMENTS OF THE INVENTION

Hereinafter, an image apparatus and an image contents searching method thereof according to exemplary embodiments of the present invention will be described in detail with reference to accompanying drawings.

Below, a TV is described as an exemplary embodiment of the image apparatus, but the present invention is not limited thereto. Alternatively, the present invention may be embodied in various other types of image apparatuses, such as a monitor or the like, to which an external device used as a storage medium is connectable.

Further, image contents described as below includes image information such as a moving picture, a photograph, etc.

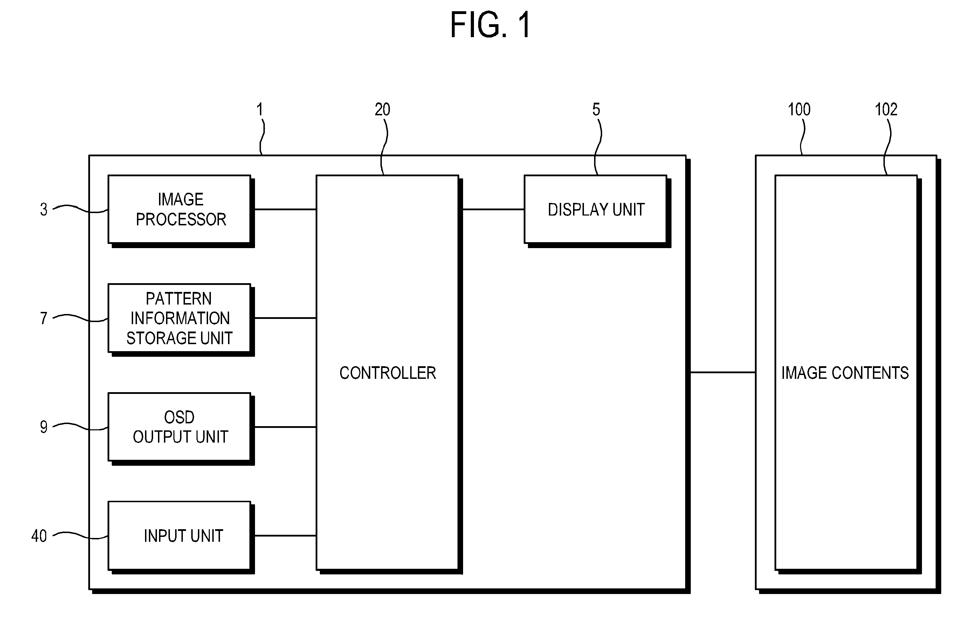

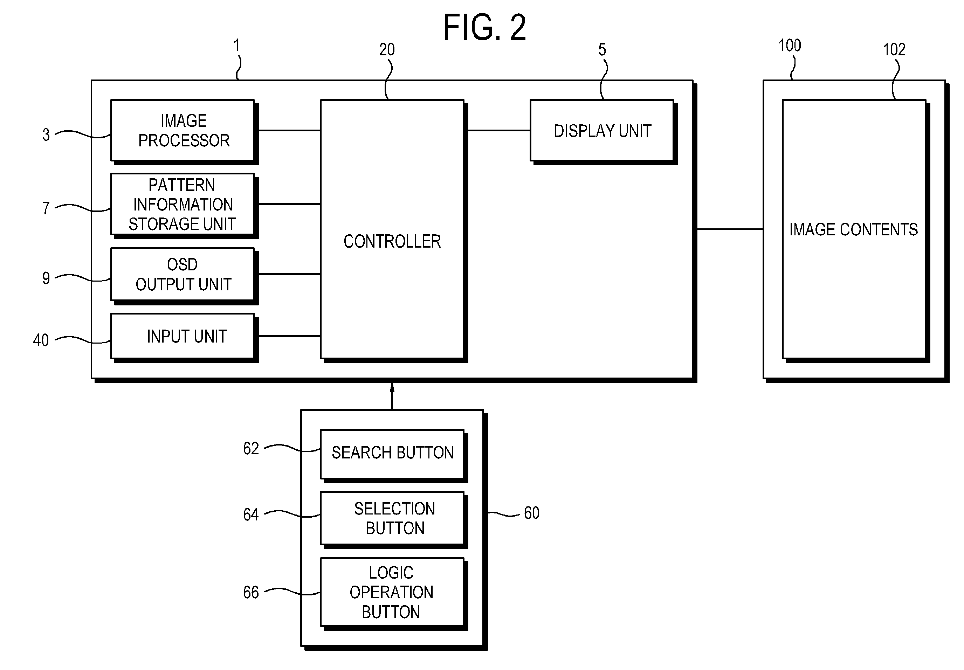

As shown in FIGs. 1 and 2, an image apparatus 1 according to an exemplary embodiment of the present invention is connected with an external device 100 in which image contents 102 are stored.

The image apparatus 1 includes an image processor 3 which processes the image contents 102 stored in the external device 100, a display unit 5 which displays the image contents 102 processed by the image processor 3, a pattern information storage unit 7 which stores image pattern information, and a controller 20 which obtains a certain image pattern from the image contents 102 by comparing the image pattern information with the image contents 102 and controlling the display unit 5 to display the obtained image pattern.

Further, the image apparatus 1 includes an on screen display output unit 9 to display keywords 12 for obtaining a certain image pattern, an input unit 40 through which an input signal is provided to the OSD output unit 9, and a remote controller 60 through which an input signal is remotely provided to the OSD output unit 9.

Before describing the image apparatus 1 according to an exemplary embodiment of the present invention, the external device 100 connected to the image apparatus 1 will be described first.

The external device 100 according to an exemplary embodiment of the present invention may include various types of storage media such as a USB memory, an SD memory, a compact flash (CF) card, etc. Further, the external device 100 according to an exemplary embodiment of the present invention may include various types of storage media, such as an external hard disk drive, a NAND flash memory, a solid state disk, etc.

Here, the currently used storage media are described as the external device 100 by way of example, but the present invention is not limited thereto. Alternatively, any storage medium which can store the image contents 102 or the like may be used as the external device 100.

The image processor 3 processes the image information of the image contents 102 so that the image contents 102 stored in the external device 100 can be displayed on the display unit 5. Further, the image processor 3 receives the image information from a broadcasting receiver and a computer providing a video signal, and processes the image information to be displayed on the display unit 5.

The pattern information storage unit 7 stores the image pattern information. Here, the image pattern information means a general image pattern. For example, the image pattern information may include image pattern information of a background such as skies, a mountain, the sea, etc. or objects such as a vehicle, an airplane, a bicycle, etc.

I n this exemplary embodiment, the pattern information storage unit 7 may store default image pattern information when the image apparatus 1 is manufactured. Also, the image pattern information stored in the pattern information storage unit 7 may be upgraded by various methods, such as a network connection or the like.

The OSD output unit 9 outputs the keywords 12 giving indications of image patterns that a user wants to search among the image contents 102 as an OSD menu 10. That is, the OSD output unit 9 outputs the OSD menu 10 to the display unit 5 so that the keyword 12 can be displayed in response to a signal input through the input unit 40 or the remote controller 60 (to be described later) for searching for a certain image pattern of the image contents 102.

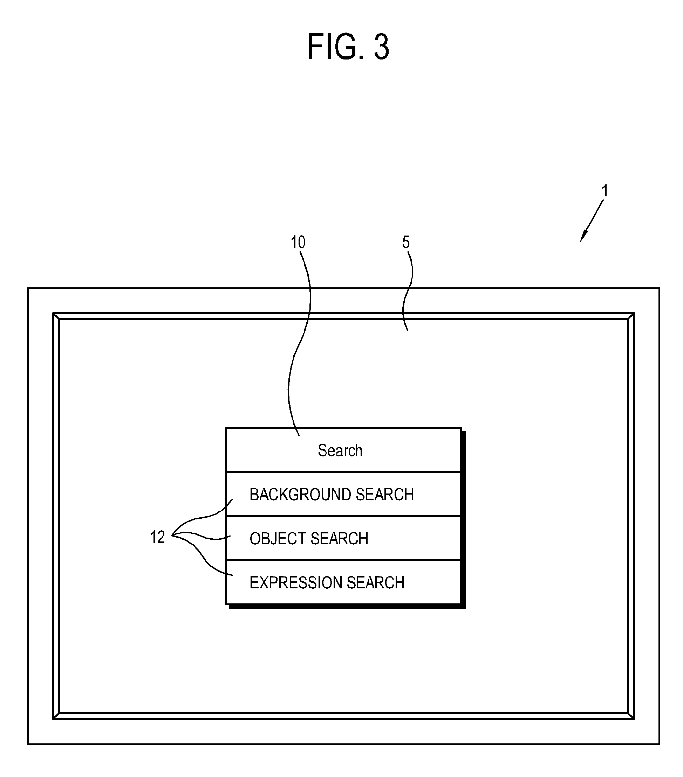

If a keyword is selected among a plurality of keywords 12 displayed as the OSD menu 10 under control of the controller 20, the OSD output unit 9 outputs sub keywords 14 of the selected keyword 12. Below, the OSD menu 10 output by the OSD output unit 9 will be described in more detail with reference to FIGs. 3 to 6.

Referring to FIG. 3, the OSD menu 10 output by the OSD output unit 9 includes searches for a background, an object and an expression. The keywords 12 of the OSD menu 10 are classified into a background search, an object search and an expression search, but is not limited thereto. Alternatively, the classification of the keywords 12 may be extended to an animal search, a sport search, etc.

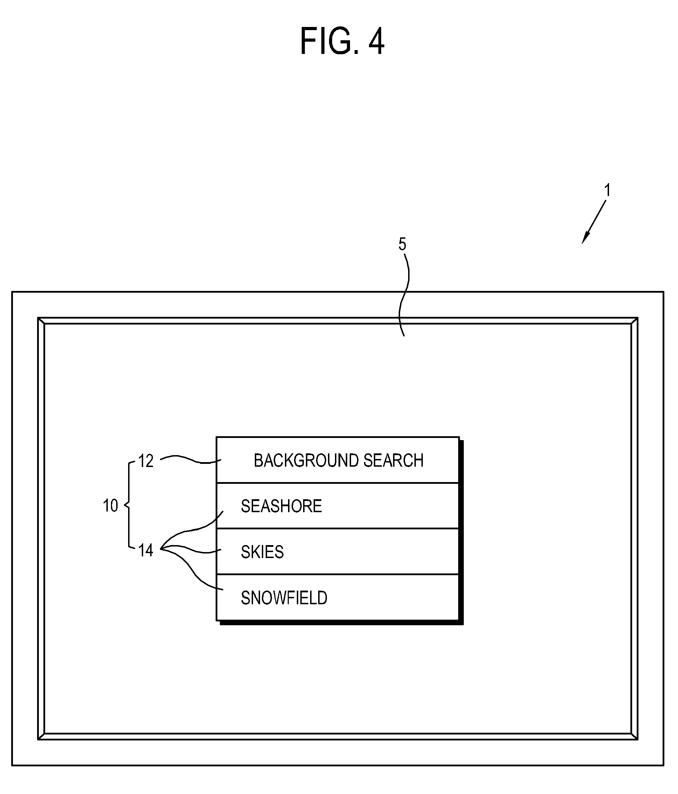

When one of the keywords 12 is selected, the sub keywords 14 of the selected keyword 12 are displayed as the OSD menu 10 output by the OSD output unit 9 (referring to FIGs. 4 to 6).

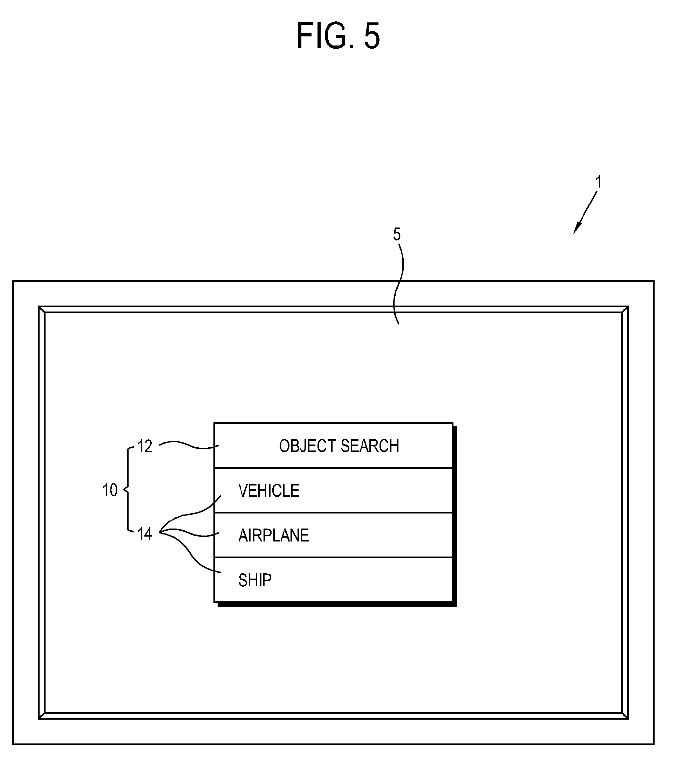

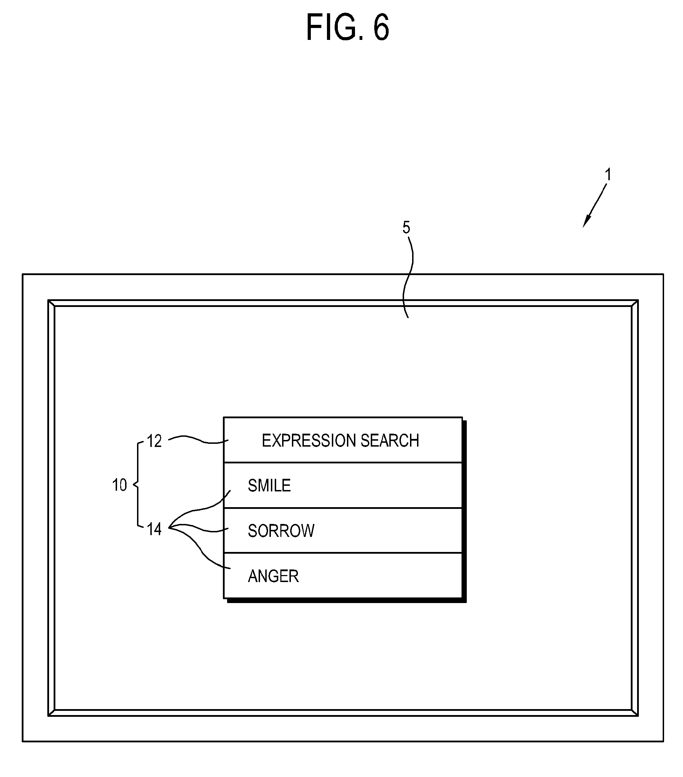

According to an exemplary embodiment of the present invention, if the background search is selected on the OSD menu 10, as shown in FIG. 4, the sub keywords 14 of the background search, e.g., the seashore, skies, and a snowfield are displayed. Further, as shown in FIG. 5, if the object search is selected on the OSD menu 10, the sub keywords 14 of the object search, e.g., a vehicle, an airplane and a ship are displayed. Also, as shown in FIG. 6, if the expression search is selected on the OSD menu 10, the sub keywords 14 of the expression search, e.g., a smile, sorrow and anger are displayed.

According to an exemplary embodiment of the present invention, each keyword 12 includes three sub keywords 14, but is not limited thereto. Alternatively, the number of sub keywords 14 may increase corresponding to the image pattern information stored in the pattern information storage unit 7. If the number of sub keywords 14 increases and there are too many to be displayed at one time as the OSD menu 10, the sub keywords 14 may be displayed on multiple pages. For example, if there are one hundred sub keywords 14 and the maximum number of sub keywords 14 displayed at one time as the OSD menu 10 is ten, ten pages including ten sub keywords 14 per page may be displayed.

Then, the controller 20 compares the image pattern information stored in the pattern information storage unit 7 with the image contents 102 as requested for searching by a user using the keyword 12. Further, the controller 20 compares the image pattern information with the image contents 102 and obtains a certain image pattern corresponding to the image pattern information based on the keyword 12 from the image contents 102, then displays the certain image pattern on the display unit 5.

That is, when a user inputs the keyword 12 for searching for a certain image pattern of the image contents 102, th e controller 20 searches the image pattern information corresponding to the input keyword 12 and obtains the certain image pattern from the image contents 102 corresponding to the image pattern information, then displays the certain image pattern on the display unit 5.

When comparing the image pattern information corresponding to the keyword 12 with a certain image pattern of the image contents 102, the controller 20 may consider a matching rate between the image pattern information and the certain image pattern and thus obtain and display the certain image pattern having a higher matching rate to the image pattern information. For example, if certain image patterns having matching rates of 90% and 85% to the image pattern information are searched while searching the certain image pattern corresponding to a vehicle, the controller 20 obtains and displays the certain image pattern having the matching rate of 90%. However, the controller 20 may not only obtain the certain image pattern having the highest matching rate to the image pattern information, but may also arrange and obtain the image patterns in order of the matching rate.

After the keyword 12 is selected, the controller 20 controls the OSD output unit 9 so that the sub keywords 14 of the selected keyword 12 can be displayed as the OSD menu 10. Since the technical features of the controller 20 which controls the OSD output unit 9 to display the OSD menu 10 are discussed above, repetitive descriptions thereof will be omitted.

The input unit 40 receives a searching request from a user. The input unit 40 has functions similar to the remote controller 60 through which the searching request of a us e r is input, and thus repetitive descriptions thereof will be avoided.

The remote controller 60 receives a searching request from a user and transmits the input signal to the OSD output unit 9, the controller 20 and the like.

According to an exemplary embodiment of the present invention, the remote controller 60 includes a search button 62 provided for inputting the keyword 12 to be displayed as the OSD menu 10, a selection button 64 provided for selecting the keywords 12 and selecting one of the sub keywords 14 of the selected keywords 12, and a logic operation button 66 provided for applying a logic operation to the selected keywords 12.

The search button 62 provides an input signal for displaying the OSD menu 10 on the display unit 5 so that a user can input the keyword 12. That is, the input signal is transmitted from the search button 62 to the controller 20, and the controller 20 controls the OSD output unit 9 to display the OSD menu 10 in response to the input signal.

The selection button 64 provides an input signal for selecting one of the keywords 12 displayed as the OSD menu 10. According to an exemplary embodiment of the present invention, if the background search is selected through the selection button 64, the sub keywords 14 of the background search are displayed. Also, the displayed sub keywords 14 are selected through the selection button 64. Here, a single sub keyword 14 or multiple sub keywords 14 may be selected through the selection button 64.

The logic operation button 66 provides an input signal for applying a logic operation to the multiple sub keywords 14 selected through the selection button 64. That is, the logic operation button 66 provides an input signal corresponding to at least one logic operation including 'and,' 'or' and 'not.'

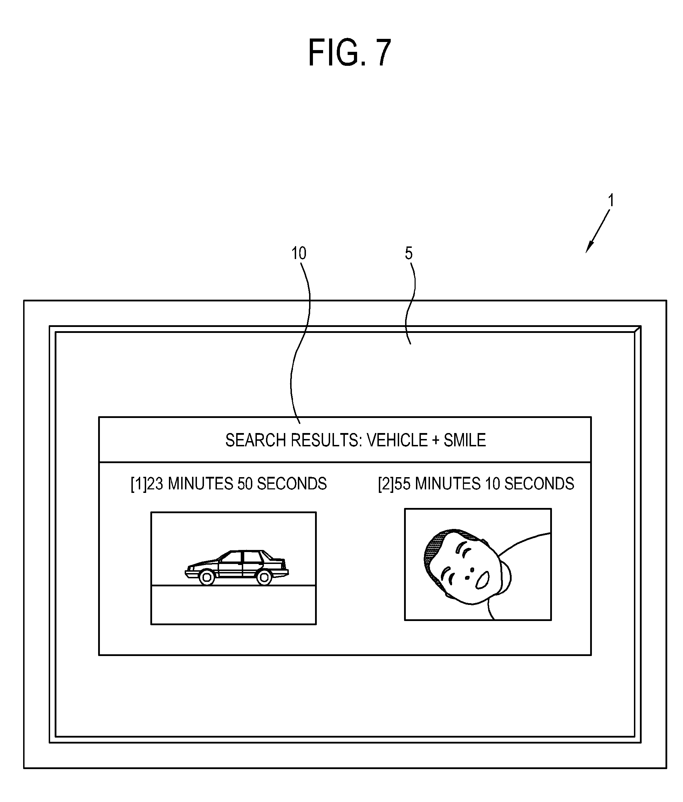

Referring to FIG. 7, the logic operation according to the input signal provided by the logic operation button 66 will be described below.

After a vehicle sub keyword and a smile sub keyword are selected through the selection button 64, the logic operation of 'and' is input through the logic operation button 66. Here, the logic operation of 'and' may be input as '+' through the logic operation button 66. According to an exemplary embodiment of the present invention, if the logic operation of 'and' is input, a certain image pattern is obtained an d displayed corresponding to the image pattern information of the vehicle sub keyword and the smile sub keyword.

Alternatively, the logic operation may be input before selecting the smile sub keyword. Further, the logic operation of 'and,' 'or' and 'not' may be input at a same time.

According to an exemplary embodiment of the present invention, 'and,' 'or' and 'not' may be input as '+,' '*' and '-,' respectively. Alternatively, the logic operation may be input as various characters provided in the logic operation button 66.

With this configuration, a method of searching the image contents 102 by the image apparatus 1 according to an exemplary embodiment of the present invention will be described below.

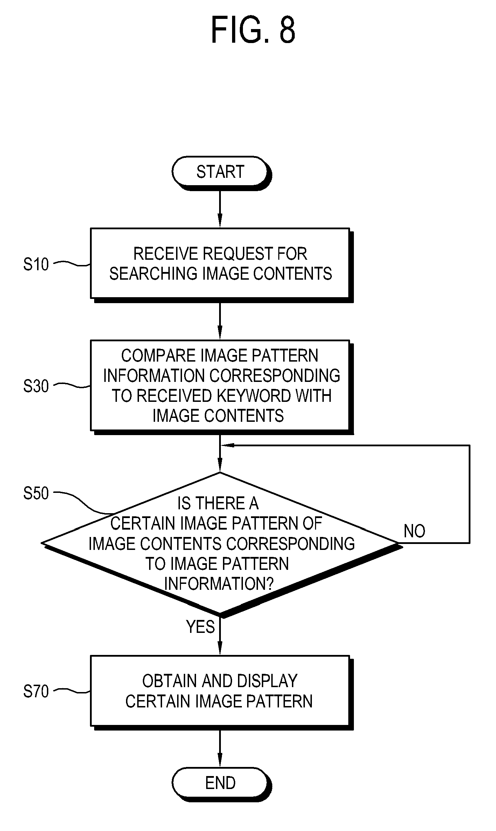

As shown in FIG. 8, a control flowchart of searching the image contents 102 by the image apparatus 1 according to an exemplary embodiment of the present invention is as follows.

First, the external device 100, in which the image contents 102 are stored, is connected to the image apparatus 1. Then, at operation S10, a user's searching request is input as the keyword 12 for searching for a certain image pattern of the image contents 102.

At operation S30, the image pattern information of the pattern information storage unit 7 is compared with the image contents 102 with respect to the keyword 12 input by the user.

At operation S50, it is determined whether the image contents 102 include the certain image pattern corresponding to the image pattern information with respect to the keyword 12. If there exists a certain image pattern corresponding to the image pattern information, at operation S70 the certain image pattern is obtained and displayed on the display unit 5.

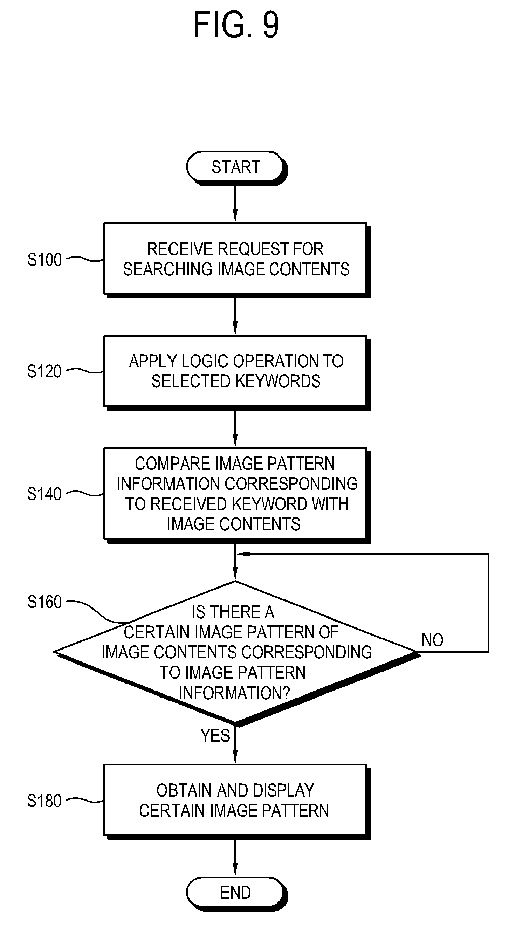

As shown in FIG. 9, a control flowchart of using the logic operation in searching the image contents 102 by the image apparatus 1 according to an exemplary embodiment of the present invention is as follows.

At operation S100, a user's searching request is input as the keyword 12 for searching for a certain image pattern of the image contents 102.

At operation S120, if the keywords 12, i.e., the sub keywords 14 are selected corresponding to the user's searching request, at least one logic operation among 'and,' 'or' and 'not' is input through the logic operation button 66.

At operation S140, the image pattern information of the pattern information storage unit 7 is compared with the image contents 102 with respect to the keyword 12 input by the user.

At operation S160, it is determined whether the image contents 102 include the certain image pattern corresponding to the image pattern information based on the keyword 12. If there exists the certain image pattern corresponding to the image pattern information stored in the pattern information storage unit 7, at operation S180 the certain image pattern is obtained and displayed on the display unit 5.

Thus, a regular image pattern of the image contents is analyzed and compared to obtain and display a certain image pattern, thereby reducing the amount of time taken in searching for the certain pattern in the image contents, thereby improving convenience for a user.

Although a few exemplary embodiments of the present invention have been shown and described, it will be appreciated by those skilled in the art that changes may be made in these embodiments without departing from the principles and spirit of the invention, the scope of which is defined in the appended claims.

Attention is directed to all papers and documents which are filed concurrently with or previous to this specification in connection with this application and which are open to public inspection with this specification, and the contents of all such papers and documents are incorporated herein by reference.

All of th e features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An image apparatus connected to an external device which stores image contents, the image apparatus comprising:
a display unit which displays the image contents;
a pattern information storage unit which stores image pattern information according to a keyword; and
a controller which compares the image pattern information stored in the pattern information storage unit with the image contents in response to a searching request using the keyword, obtains an image pattern corresponding to the image pattern information according to the keyword from the image contents, and displays the image pattern on the display unit.

2. The image apparatus according to claim 1, further comprising an on screen display (OSD) output unit which outputs the keyword as an OSD menu to the display unit.

3. The image apparatus according to claim 1 or 2, wherein if the keyword is selected, the controller controls the OSD output unit to output sub keywords of the selected keyword as the OSD menu.

4. The image apparatus according to claim 3, wherein the keyword comprises at least one of a background, an object and an expression.

5. The image apparatus according to claim 3 or 4, wherein at least two sub keywords selected among the sub keywords output as the OSD menu are combined by at least one logic operation including 'and,' 'or' and 'not.'

6. The image apparatus according to any one of claims 3 through 5, further comprising a remote controller which receives the searching request,
wherein the remote controller comprises:
a search button which outputs the keyword as the OSD menu;
a selection button which selects the keyword and selects at least one of the sub keywords of the selected keyword; and
a logic operation button which applies the least one logic operation to a plurality of selected sub keywords.

7. An image contents searching method of an image apparatus connected to an external device which stores image contents, the image contents searching method comprising:
storing image pattern information in a pattern information storage unit according to a keyword;
receiving a searching request using the keyword;
comparing the image pattern information stored in the pattern information storage unit with the image contents stored in the external device in response to the searching request using the keyword; and
obtaining an image pattern corresponding to the image pattern information stored in the pattern information storage unit according to the keyword from the image contents stored in the external device; and
displaying the obtained image pattern.

8. The image contents searching method according to claim 7, wherein the receiving the searching request comprises outputting the keyword as an on screen display (OSD) menu on a display of the image apparatus.

9. The image contents searching method according to claim 7 or 8, wherein the receiving the searching request further comprises selecting the keyword output as the OSD menu, and selecting at least one of sub keywords of the selected keyword.

10. The image contents searching method according to claim 7, 8 or 9, wherein the receiving the searching request further comprises applying a logic operation to a plurality of selected sub keywords.

11. The image contents searching method according to claim 10, wherein the applying the logic operation to the plurality of selected sub keywords comprises applying at least one logic operation including 'and,' 'or' and 'not.'
